(19) Europäisches Patentamt / European Patent Office / Office européen des brevets

(11) **EP 4 683 376 A1**

(12) **EUROPEAN PATENT APPLICATION**
published in accordance with Art. 153(4) EPC

(43) Date of publication:
**21.01.2026 Bulletin 2026/04**

(21) Application number: **24778171.9**

(22) Date of filing: **28.03.2024**

(51) International Patent Classification (IPC):
**H04W 24/10** (2009.01)

(52) Cooperative Patent Classification (CPC):
**H04L 5/00; H04W 24/02; H04W 24/10;**
**H04W 72/232**

(86) International application number:
**PCT/CN2024/084523**

(87) International publication number:
**WO 2024/199385 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.03.2023 CN 202310342197**

(71) Applicants:
• **CHINA MOBILE COMMUNICATION CO., LTD**
 **RESEARCH INSTITUTE**
 **Beijing 100053 (CN)**
• **CHINA MOBILE COMMUNICATIONS GROUP CO.,**
 **LTD.**
 **Beijing 100032 (CN)**

(72) Inventors:
• **CAO, Yuhua**
 **Beijing 100053 (CN)**
• **ZUO, Jun**
 **Beijing 100053 (CN)**
• **ZHENG, Yi**
 **Beijing 100053 (CN)**
• **LIU, Yongchang**
 **Beijing 100053 (CN)**
• **WANG, Fei**
 **Beijing 100053 (CN)**

(74) Representative: **Novagraaf Technologies**
 **Bâtiment O2**
 **2, rue Sarah Bernhardt**
 **CS90017**
 **92665 Asnières-sur-Seine Cedex (FR)**

(54) **CONFIGURATION METHOD, TERMINAL, NETWORK DEVICE AND STORAGE MEDIUM**

(57) Embodiments of the present application provide a configuration method, a terminal, a network device, and a storage medium. The method comprises: receiving a CSI reporting configuration, the CSI reporting configuration comprising or being associated with a CSI resource configuration for channel measurement, the CSI resource configuration comprising a CSI-RS resource set list, and the CSI-RS resource set list comprising or being associated with a number N of non-zero power (NZP) CSI-RS resource sets, N CSI-SSB resource sets or N NZP-CSI-RS and CSI-SSB resource sets, N being an integer greater than or equal to 1. By means of the described technical solution, the purposes of reducing configuration overhead and channel overhead are achieved.

Received a CSI report configuration. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1 — S101

**FIG. 1**

## Description

### CROSS-REFERENCE TO RELATED APPLICATION

This application is based on and claims priority to Chinese patent No. 202310342197.6 filed on March 31, 2023, the contents of which are hereby incorporated by reference in by its entirety.

### TECHNICAL FIELD

The disclosure relates to the technical field of communications, and in particular to a method for configuration, a terminal, a network device, and a storage medium.

### BACKGROUND

In use cases of time-domain beam prediction, a terminal needs to measure multiple pieces of beam information of multiple moments, so as to perform prediction. However, in the related art, in order to support the terminal in configuring beam information of multiple moments, the network device needs to configure multiple Channel State Information (CSI) report configurations of the corresponding moments for the terminal, resulting in an increase of configuration overhead. Meanwhile, when the terminal is configured with multiple CSI report configurations, the terminal is also required to perform CSI reporting for multiple times, resulting in an increase of uplink channel overhead.

### SUMMARY

Embodiments of the disclosure provide a method for configuration, a terminal, a network device, and a storage medium that can save configuration overhead and channel overhead.

The technical solution of the disclosure is implemented as follows.

In a first aspect, embodiments of the disclosure provide a method for configuration, performed by a terminal, and including: receiving a channel state information (CSI) report configuration. The CSI report configuration includes or is associated with a CSI resource configuration for channel measurement. The CSI resource configuration includes a CSI reference signal (CSI-RS) resource set list; and the CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

In the above method for configuration, the method further includes: determining, according to the CSI resource configuration, at least one piece of first information that is within a first time interval, wherein the first time interval has a first time point as a start point, and has a first time length or a first time gap as a length; and reporting the at least one piece of first information to a network device according to the CSI report configuration.

In the above method for configuration, the first information is at least one of: channel information, beam information, a layer 1 signal to interference plus noise ratio (L1-SINR), a layer 1 reference signal received power (L1-RSRP), a reference signal resource indicator, or a channel impulse response.

In the above method for configuration, the method further includes: determining, according to a CSI report time corresponding to the CSI report configuration and a first numerical value, the first time point; wherein the first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control (MAC) signaling and/or downlink control information (DCI) signaling; where the first candidate value set is configured by the network device through high-layer signaling, or is preset.

In the above method for configuration, the method further includes: reporting the first numerical value to the network device. The first numerical value is carried in a part one of the CSI report configuration, or the part one of the CSI report configuration includes the first numerical value.

In the above method for configuration, the method further includes: determining the first time length or the first time gap according to a size of a first time unit and/or a number P of first time units.

In the above method for configuration, the number P of first time units is determined in at least one of following manners: the number P of first time units is indicated by high-layer signaling; the number P of first time units is a fixed numeric value; the number P of first time units is selected from a second candidate value set; or the number P of first time units is selected from the second candidate value set according to indication of media access control (MAC) signaling and/or downlink control information (DCI) signaling; where the second candidate value set is configured by the network device through high-layer signaling, or is preset.

In the above method for configuration, the method further includes: reporting the number P of the first time units to the network device, wherein the number P of the first time units is carried in a part one of the CSI report configuration, or the part one of the CSI report configuration includes the number P of the first time units.

In the above method for configuration, the size of the first time unit is configured by high-layer signaling, or is preset.

In the above method for configuration, the method further includes: reporting T groups of first information to the network device. Each group of first information among the T groups of first information corresponds to P/T first time units, and includes K pieces of first information, K being an integer greater than or equal to 1.

In the above method for configuration, the method further includes: reporting S groups of first information to the network device. Each group of first information among the S groups of first information corresponds to one first time unit and includes K pieces of first information, K being an integer greater than or equal to 1.

In the above method for configuration, the method further includes: in a case that a resource type in the CSI resource configuration is configured to be semi-persistent or periodic, the CSI-RS resource set list in the CSI resource configuration includes or is associated with: the N NZP-CSI-RS resource sets, or the N CSI-SSB resource sets, or both the N NZP-CSI-RS resource sets and the N CSI-SSB resource sets, N being an integer greater than or equal to 1.

In the above method for configuration, the method further includes: in a case that the CSI-RS resource set list includes or is associated with the N NZP-CSI-RS resource sets, each NZP-CSI-RS resource in the N NZP-CSI-RS resource sets corresponds to a same transmission periodicity.

In the above method for configuration, the method further includes: in a case that the CSI-RS resource set list includes or is associated with the N NZP-CSI-RS resource sets and N is an integer greater than 1, NZP-CSI-RS resources from different NZP-CSI-RS resource sets among the N NZP-CSI-RS resource sets correspond to different slot offsets.

In the above method for configuration, the method further includes: in a case that the CSI-RS resource set list includes or is associated with the N NZP-CSI-RS resource sets, parameters 'repetition' of the N NZP-CSI-RS resource sets are configured to be off.

In the above method for configuration, the method further includes: in a case that a report configuration type in the CSI report configuration and a resource type in the CSI resource configuration are configured to be aperiodic, the CSI-RS resource set list in the CSI resource configuration includes or is associated with: M NZP-CSI-RS resource sets, or M CSI-SSB resource sets, or both M NZP-CSI-RS resource sets and M CSI-SSB resource sets, M being an integer greater than or equal to 1.

In the above method for configuration, the method further includes: receiving downlink control information (DCI). The DCI triggers a CSI report corresponding to the CSI report configuration; the CSI report configuration includes or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

In the above method for configuration, a numeric value of at least one of N, Q or M is configured by radio resource control (RRC) signaling or is a fixed numeric value.

In a second aspect, embodiments of the disclosure provide a method for configuration, performed by a network device, and including: configuring a channel state information (CSI) report configuration, wherein the CSI report configuration includes or is associated with a CSI resource configuration for channel measurement. The CSI resource configuration includes a CSI reference signal (CSI-RS) resource set list; and the CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

In the above method for configuration, the method further includes: in a case that a resource type in the CSI resource configuration is configured to be semi-persistent or periodic, the CSI-RS resource set list in the CSI resource configuration includes or is associated with: the N NZP-CSI-RS resource sets, or the N CSI-SSB resource sets, or both the N NZP-CSI-RS resource sets and the N CSI-SSB resource sets, N being an integer greater than or equal to 1.

In the above method for configuration, the method further includes: in a case that the CSI-RS resource set list includes or is associated with the N NZP-CSI-RS resource sets, each NZP-CSI-RS resource in the N NZP-CSI-RS resource sets corresponds to a same transmission periodicity.

In the above method for configuration, the method further includes: in a case that the CSI-RS resource set list includes or is associated with the N NZP-CSI-RS resource sets and N is an integer greater than 1, NZP-CSI-RS resources from different NZP-CSI-RS resource sets among the N NZP-CSI-RS resource sets correspond to different slot offsets.

In the above method for configuration, the method further includes: in a case that the CSI-RS resource set list includes or is associated with the N NZP-CSI-RS resource sets, parameters 'repetition' of the N NZP-CSI-RS resource sets are configured to be 'off'.

In the above method for configuration, the method further includes: in a case that a report configuration type in the CSI report configuration and a resource type in the CSI resource configuration are configured to be aperiodic, the CSI-RS resource set list in the CSI resource configuration includes or is associated with: M NZP-CSI-RS resource sets, or M CSI-SSB resource sets, or both M NZP-CSI-RS resource sets and M CSI-SSB resource sets, M being an integer greater than or equal to 1.

In the above method for configuration, the method further includes: triggering, through downlink control information (DCI), a CSI report corresponding to the CSI report configuration, wherein the CSI report configuration includes or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

In the above method for configuration, a numeric value of at least one of N, Q or M is configured by radio resource control (RRC) signaling or is a fixed numeric value.

In the above method for configuration, the method further includes: receiving at least one piece of first information that is within a first time interval and is determined according to the CSI resource configuration by a terminal, wherein the first time interval has a first time point as a start point, and has a first time length or a first time gap as a length; and receiving the at least one piece of first information according to the CSI report configuration.

In the above method for configuration, the first information is at least one of: channel information, beam information, a layer 1 signal to interference plus noise ratio (L1-SINR), a layer 1 reference signal received power (L1-RSRP), a reference signal resource indicator, or a channel impulse response.

In the above method for configuration, the first time point is determined by the terminal according to a CSI report time corresponding to the CSI report configuration and a first numerical value. The first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control (MAC) signaling and/or downlink control information (DCI) signaling; where the first candidate value set is configured by the network device through high-layer signaling, or is preset.

In the above method for configuration, the method further includes: receiving the first numerical value reported by the terminal. The first numerical value is carried in a part one of the CSI report configuration, or the part one of the CSI report configuration includes the first numerical value.

In the above method for configuration, the first time length or the first time gap is determined according to a size of a first time unit and/or a number P of first time units.

In the above method for configuration, the number P of first time units is determined by the terminal in at least one of following manners: the number P of first time units is indicated by high-layer signaling; the number P of first time units is a fixed numeric value; the number P of first time units is selected from a second candidate value set; or the number P of first time units is selected from the second candidate value set according to indication of media access control (MAC) signaling and/or downlink control information (DCI) signaling; and wherein the second candidate value set is configured by the network device through high-layer signaling, or is preset.

In the above method for configuration, the method further includes: receiving the number P of first time units reported by the terminal, wherein the number P of first time units is carried in a part one of the CSI report configuration, or the part one of the CSI report configuration includes the number P of first time units.

In the above method for configuration, the size of the first time unit is configured by high-layer signaling, or is preset.

In the above method for configuration, the method further includes: receiving T groups of first information reported by the terminal. Each group of first information among the T groups of first information corresponds to P/T first time units, and includes K pieces of first information, K being an integer greater than or equal to 1.

In the above method for configuration, the method further includes: receiving S groups of first information reported by the terminal, wherein each group of first information among the S groups of first information corresponds to one first time unit and includes K pieces of first information, K being an integer greater than or equal to 1.

In a third aspect, embodiments of the disclosure provide a terminal, including: a first receiving module, configured to receive a channel state information (CSI) report configuration, wherein the CSI report configuration includes or is associated with a CSI resource configuration for channel measurement; wherein the CSI resource configuration includes a CSI reference signal (CSI-RS) resource set list; and the CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

In a fourth aspect, embodiments of the disclosure provide a network device, including: a configuration module, configured to configure a channel state information (CSI) report configuration for a terminal, wherein the CSI report configuration includes or is associated with a CSI resource configuration for channel measurement; wherein the CSI resource configuration includes a CSI reference signal (CSI-RS) resource set list; and the CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

In a fifth aspect, embodiments of the disclosure provide a terminal, including: a first processor, a first transmitter, a first receiver, a first memory and a first communication bus, the first processor executes a running program stored in the first memory to implement any above method for configuration applied to a terminal.

In a sixth aspect, embodiments of the disclosure provide a network device, including: a second processor, a second transmitter, a second receiver, a second memory and a second communication bus, the second processor executes a running program stored in the second memory to implement any above method for configuration applied to a network device.

In a seventh aspect, embodiments of the disclosure provide a storage medium having stored thereon with a computer program that, when executed by a first processor, implements any above method for configuration applied to a terminal, or that, when executed by a second processor, implements any above method for configuration applied to a network device.

Embodiments of the disclosure provide a method for configuration, a terminal, a network device, and a storage medium. The method includes that a CSI report configuration is received. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1. By means the above implementation scheme, the CSI report configuration is configured for the terminal, so that the terminal can measure multiple pieces of information of multiple moments through one CSI report configuration, and reports the measured multiple pieces of information to the network device through one CSI report configuration, thereby saving configuration overhead and channel overhead.

BRIEF DESCRIPTION OF THE DRAWINGS

FIG. 1 illustrates a first schematic flowchart of a method for configuration according to embodiments of the disclosure.
FIG. 2 illustrates a second schematic flowchart of a method for configuration according to embodiments of the disclosure.
FIG. 3 illustrates a first schematic structural diagram of composition of a terminal according to embodiments of the disclosure.
FIG. 4 illustrates a second schematic structural diagram of composition of a terminal according to embodiments of the disclosure.
FIG. 5 illustrates a first schematic structural diagram of composition of a network device according to embodiments of the disclosure.
FIG. 6 illustrates a second schematic structural diagram of composition of a network device according to embodiments of the disclosure.

DETAILED DESCRIPTION

In an existing channel state information (CSI) report configuration (CSI-ReportConfig), when a high-layer parameter reportQuantity in the CSI-ReportConfig is configured as "cri-Reference Signal Receiving Power (RSRP)", "synchronization signal block (ssb)-Index-RSRP", "cri-Signal to Interference plus Noise Ratio (SINR)" or "ssb-Index-SINR", it may be understood that this CSI report configuration is used for beam management, and this CSI-ReportConfig may be configured with one CSI resource configuration (CSI-ResourceConfig) for channel measurement.

The parameter csi-RS-ResourceSetList in the CSI resource configuration (CSI-ResourceConfig) may include at least one non-zero power NZP-CSI-RS-ResourceSet or at least one CSI-SSB-ResourceSet. However, if a resource type parameter resourceType in CSI-ResourceConfig is configured as "semiPersistent" or "periodic", then csi-RS-ResourceSetList may include only one NZP-CSI-RS-ResourceSet or CSI-SSB-ResourceSet; and if the resource type parameter resourceType in the CSI-ResourceConfig is configured as "aperiodic", the csi-RS-ResourceSetList may include multiple NZP-CSI-RS-ResourceSets or CSI-SSB-ResourceSets.

In the related art, in order to support a terminal in configuring beam information of multiple moments, a base station needs to configure multiple CSI report configurations corresponding to the multiple moments for the terminal. This brings about very significant configuration overhead. Meanwhile, the terminal configured with multiple CSI report configurations is also required to perform multiple CSI reports, which also brings very significant uplink channel overhead. Based on this, the disclosure provides a method for configuration, which enables a terminal to measure multiple pieces of information of multiple moments through one CSI resource configuration in a CSI report configuration, and to report the measured multiple pieces of information to a network device through one CSI report, thereby saving configuration overhead and channel overhead.

It is to be understood that the specific embodiments described herein are merely for explaining the disclosure, rather than limiting.

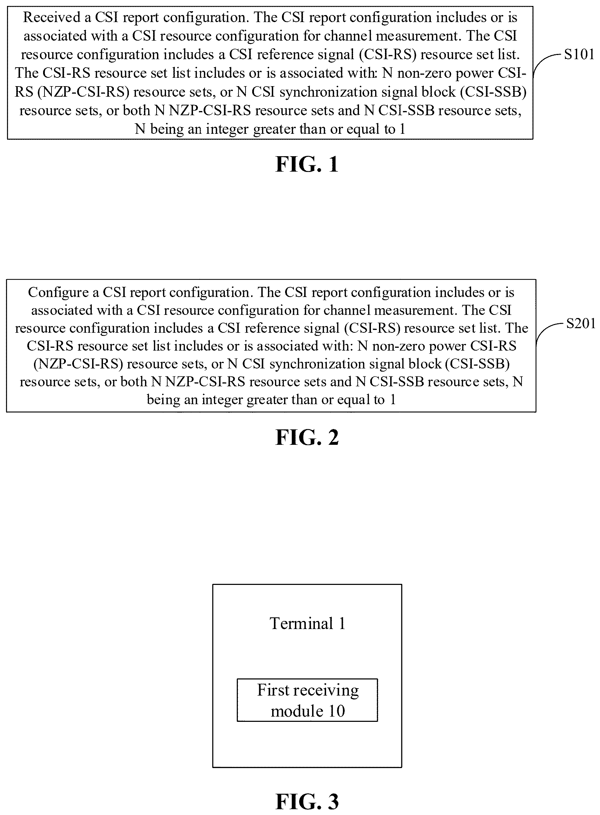

Embodiments of the disclosure provide a method for configuration, applied to a terminal. FIG. 1 illustrates a first flowchart of a method for configuration according to embodiments of the disclosure. As illustrated in FIG. 1, the method for configuration may include operation S101.

At S101, a CSI report configuration is received. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

In embodiments of the disclosure, the terminal receives a CSI report configuration. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

In embodiments of the disclosure, in a case that a resource type in the CSI resource configuration is configured to be semi-persistent or periodic, the CSI-RS resource set list in the CSI resource configuration includes or is associated with: the N NZP-CSI-RS resource sets, or the N CSI-SSB resource sets, or both the N NZP-CSI-RS resource sets and the N CSI-SSB resource sets, N being an integer greater than or equal to 1.

It is to be noted that, in the embodiments of the disclosure, when the parameter resourceType in the CSI-ResourceConfig is configured as "semiPersistent" or "periodic", the csi-RS-ResourceSetList (CSI-RS resource set list) may include N NZP-CSI-RS resource sets or N CSI-SSB resource sets. N is greater than or equal to 1, and the numeric value of N is configured by Radio Resource Control (RRC) or is set to a fixed value.

In embodiments of the disclosure, in a case that the CSI-RS resource set list includes or is associated with the N NZP-CSI-RS resource sets, each NZP-CSI-RS resource in the N NZP-CSI-RS resource sets corresponds to a same transmission periodicity.

It is to be noted that, in embodiments of the disclosure, assuming that the csi-RS-ResourceSetList in the CSI-ResourceConfig includes N NZP-CSI-RS-ResourceSets, each NZP-CSI-RS-Resource of the N NZP-CSI-RS-ResourceSets is configured with a same transmission periodicity. That is, the periodicityAndOffset configured for each NZP-CSI-RS-Resource corresponds to a same transmission periodicity.

Exemplarily, assuming that there are two NZP-CSI-RS-ResourceSets (#1) and (#2), including NZP-CSI-RS-Resources: (#1_1, #1_2) and (#2_1, #2_2) respectively, the transmission periodicities (i.e., report intervals) corresponding to the four NZP-CSI-RS-Resources: (#1_1, #1_2) and (#2_1, #2_2) are same.

In embodiments of the disclosure, in a case that the CSI-RS resource set list includes or is associated with the N NZP-CSI-RS resource sets and N is an integer greater than 1, NZP-CSI-RS resources from different NZP-CSI-RS resource sets among the N NZP-CSI-RS resource sets correspond to different slot offsets.

It is to be noted that, in embodiments of the disclosure, in any two of the N NZP-CSI-RS-ResourceSets, a slot offset of any NZP-CSI-RS-Resource in one NZP-CSI-RS-ResourceSet is not equal to that of any NZP-CSI-RS-Resource in the other NZP-CSI-RS-ResourceSet. That is, the periodicityAndOffset configured for any NZP-CSI-RS-Resource in one NZP-CSI-RS-ResourceSet is not equal to that configured for any NZP-CSI-RS-Resource in the other NZP-CSI-RS-Resource-Set.

Exemplarily, assuming that there are two NZP-CSI-RS-ResourceSets (#1) and (#2), including NZP-CSI-RS-Resources: (#1_1, #1_2) and (#2_1, #2_2) respectively, then the offsets corresponding to these four NZP-CSI-RS-Resources: (#1_1, #1_2) and (#2_1, #2_2) may be at least the following cases: (&1, &2) and (&3, &4); (&1, &2) and (&3, &3); (&1, &1) and (&3, &4); and (&1, &1) and (&3, &3). (&1, &2) and (&3, &4) represents that the offsets corresponding to the four NZP-CSI-RS-Resources of #1_1, #1_2, #2_1, and #2_2 are different from each other. (&1, &2) and (&3, &3) represents that the offsets corresponding to the two NZP-CSI-RS-Resources #1_1 and #1_2 are different from each other, while the offsets corresponding to the two NZP-CSI-RS-Resources #2_1 and #2_2 are same as each other. (&1, &1) and (&3, &4) represent that the offsets corresponding to the two NZP-CSI-RS-Resources #1_1 and #1_2 are same as each other, while the offsets corresponding to the two NZP-CSI-RS-Resources #2_1 and #2_2 are different from each other. (&1, &1) and (&3, &3) indicate that the offsets corresponding to the two NZP-CSI-RS-Resources #1_1 and #1_2 are same as each other, and the offsets corresponding to the two NZP-CSI-RS-Resources #2_1 and #2_2 are also same as each other.

In embodiments of the disclosure, in a case that the CSI-RS resource set list includes or is associated with the N NZP-CSI-RS resource sets, parameters 'repetition' of the N NZP-CSI-RS resource sets are configured to be 'off'.

It is to be noted that, in embodiments of the disclosure, if the csi-RS-ResourceSetList includes N NZP-CSI-RS-ResourceSets, parameters 'repetition' of the N NZP-CSI-RS-ResourceSets are configured to be 'off'.

In embodiments of the disclosure, in a case that a report configuration type in the CSI report configuration and a resource type in the CSI resource configuration are configured to be aperiodic, the CSI-RS resource set list in the CSI resource configuration includes or is associated with: M NZP-CSI-RS resource sets, or M CSI-SSB resource sets, or both M NZP-CSI-RS resource sets and M CSI-SSB resource sets, M being an integer greater than or equal to 1.

It is to be noted that, in embodiments of the disclosure, when the parameter reportConfigType (report configuration type) in the CSI-ReportConfig is configured to be "aperiodic" and the parameter resourceType (resource type) in the CSI-ResourceConfig is configured to be "aperiodic", the csi-RS-ResourceSetList may include M NZP-CSI-RS-ResourceSets or M CSI-SSB-ResourceSets. M is greater than or equal to 1, and the numeric value of M is configured by RRC or is set to a fixed value.

In embodiments of the disclosure, the terminal receives downlink control information (DCI). The DCI triggers CSI report corresponding to the CSI report configuration. The CSI report configuration includes or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

It is to be noted that, in embodiments of the disclosure, the base station may trigger the CSI report corresponding to the CSI-ReportConfig through the DCI, and further indicate that Q NZP-CSI-RS-ResourceSets or Q CSI-SSB-ResourceSets in the csi-RS-Resource-SetList in the CSI-ResourceConfig for channel measurement associated with the CSI-ReportConfig can be used for beam measurement. Q is greater than or equal to 1, and the numeric value of Q is configured by RRC or is set to a fixed value.

It may be understood that the base station of the disclosure can trigger the CSI report corresponding to the CSI-ReportConfig through the DCI, and since the CSI report triggered under a good network environment is more accurate, the base station can flexibly trigger the CSI report according to the detected network environment, so that the CSI report has higher flexibility and accuracy.

It is to be noted that, in the embodiments of the disclosure, the report configuration type in the CSI report configuration and the resource type in the CSI resource configuration being configured to be aperiodic are the same as the resource type in the CSI resource configuration being configured to be semi-persistent or periodic in other rules, which will not be described herein again.

It is to be noted that, in embodiments of the disclosure, it is assumed that the number of NZP-CSI-RS-Resources in one NZP-CSI-RS-ResourceSet among the N NZP-CSI-RS-ResourceSets, or the number of CSI-SSB-Resources in one CSI-SSB-ResourceSet among the N CSI-SSB-ResourceSets is $C_i$, then the terminal needs to report the L1-RSRPs corresponding to all NZP-CSI-RS-Resources in the N NZP-CSI-RS-Resource-Sets, or L1-SINRs corresponding to all CSI-SSB-Resources in the N CSI-SSB-ResourceSets, that is,

$$\sum_{i=1}^{N} C_i \quad \text{L1-RSRPs or L1-SINRs in total.}$$

In embodiments of the disclosure, the terminal receives the CSI report configuration from the network device. The terminal determines, according to the CSI resource configuration, at least one piece of first information that is within a first time interval. The first time interval has a first time point as a start point, and has a first time length or a first time gap as a length. The terminal reports the at least one piece of first information to the network device according to the CSI report configuration.

In embodiments of the disclosure, the first information is at least one of: channel information, beam information, a layer 1 signal to interference plus noise ratio (L1-SINR), a layer 1 reference signal received power (L1-RSRP), a reference signal resource indicator, or a channel impulse response. The specific first information may be determined according to actual situations, and is not specifically limited in the embodiments of the disclosure herein.

It is to be noted that, in embodiments of the disclosure, when the terminal obtains multiple pieces of beam information of multiple moments by one measurement through the configured CSI report configuration, beam information in some future period of time can be predicted by a prediction module. In this case, the base station needs to configure a future time gap corresponding to a preset beam for the terminal.

In embodiments of the disclosure, the terminal determines, according to a CSI report time corresponding to the CSI report configuration and a first numerical value, the first time point. The first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control (MAC) signaling and/or downlink control information (DCI) signaling. The first candidate value set is configured by the network device through high-layer signaling, or is preset.

It is to be noted that, in embodiments of the disclosure, the start point of the time gap is defined as (n + δ), where n is the CSI report time, and δ (first numeric value) ≥ 0.

It is to be noted that in embodiments of the disclosure, δ may be determined in the following three ways: (1) δ is a fixed numerical value; (2) δ is configured by high-layer signaling (e.g., RRC signaling); (3) a candidate value set ($\delta_1$, $\delta_2$, $\delta_3$, $\delta_4$) is configured or preset by high-layer signaling, and then the terminal selects a value from the set and reports same to the network device. The selected candidate value is carried in Part1 of the CSI report configuration, or the network device indicates one of the candidate values through Media Access Control (MAC) or DCI. The specific manner of determining the first numerical value may be determined according to an actual situation, and is not specifically limited in the embodiments of the disclosure herein.

In embodiments of the disclosure, after determining the first numeric value, the terminal reports the first numerical value to the network device. The first numerical value is carried in a part one of the CSI report configuration, or the part one of the CSI report configuration includes the first numerical value.

In embodiments of the disclosure, the terminal determines the first time length or the first time gap according to a size of a first time unit and/or a number P of first time units.

In embodiments of the disclosure, the size of the first time unit is configured by high-layer signaling, or is preset.

In embodiments of the disclosure, the number P of the first time units is determined in at least one of following manners: the number P of first time units is indicated by high-layer signaling; the number P of first time units is a fixed numeric value; the number P of first time units is selected from a second candidate value set; or the number P of first time units is selected from the second candidate value set according to indication of media access control (MAC) signaling and/or downlink control information (DCI) signaling. The second candidate value set is configured by the network device through high-layer signaling, or is preset.

It is to be noted that, in embodiments of the disclosure, the length W of the time gap is defined in units of slots, and $W \geq 1$. $W = d \times P$, where d is the size of the first time unit and is in units of slots, and P is the number of first time units and is unitless.

It is to be noted that in embodiments of the disclosure, the number P of first time units may be determined in the following three ways: (1) P is configured by high-layer signaling (e.g., RRC signaling); (2) P is a fixed numerical value; (3) a candidate value set ($P_1$, $P_2$, $P_3$, $P_4$) is configured or preset by high-layer signaling, and then the terminal selects a value from the set and reports same to the network device. The selected candidate value is carried in Part1 of the CSI report configuration, or the network device indicates one of the candidate values by Media Access Control (MAC) signaling or DCI signaling. The specific manner of determining the number P of first time units may be determined according to an actual situation, and is not specifically limited in the embodiments of the disclosure herein.

In embodiments of the disclosure, after determining the number P of the first time units, the terminal reports the number P of the first time units to the network device. The number P of the first time units is carried in a part one of the CSI report configuration, or the part one of the CSI report configuration includes the number P of the first time units.

In embodiments of the disclosure, after determining the start point and length of the future time gap, the terminal predicts the information of the future time gap, and then reports the predicted information to the network device. Specifically, the terminal reports T groups of first information to the network device. Each group of first information among the T groups of first information corresponds to P/T first time units, and includes K pieces of first information, K being an integer greater than or equal to 1.

It is to be noted that, in embodiments of the disclosure, the terminal reports T group of beam identifiers (IDs) and corresponding L1-RSRPs or L1-SINRs to the network device, each group of beam IDs corresponding to P/T time units. Each group of beam IDs among the T groups of beam IDs includes K beam IDs and K corresponding L1-RSRPs or L1-SINRs, $K \geq 1$.

In embodiments of the disclosure, after determining the start point and length of the future time gap, the terminal predicts the information of the future time gap, and then reports the predicted information to the network device. Specifically, the terminal reports S groups of first information to the network device. Each group of first information among the S groups of first information corresponds to one first time unit, and includes K pieces of first information, K being an integer greater than or equal to 1.

It is to be noted that, in embodiments of the disclosure, the terminal reports, according to the number P of the first time units, S group of beam identifiers (IDs) and corresponding L1-RSRPs or L1-SINRs to the network device, each group of beam IDs corresponding to one time unit. Each group of beam IDs among the S groups of beam IDs includes K beam IDs and K corresponding L1-RSRPs or L1-SINRs, $K \geq 1$.

It may be understood that the method for configuring a prediction time gap proposed in the disclosure can realize flexible configuration of the start point and length of the time gap. For scenarios in which the beam changes rapidly in the time domain, the length of the time gap may be set small; otherwise, the length of the time gap may be set large, to help the terminal flexibly adjust the beam prediction interval and improve the prediction accuracy. Further, considering that there is a certain interval between the time of a CSI report and the time when the network device performs Physical Downlink Shared Channel (PDSCH)/Physical Uplink Control Channel (PUCCH) scheduling, the network device may also flexibly adjust the start point of the time gap to ensure that a predicted time interval of a beam is closer to a scheduled time interval, so that the beam prediction in the time domain is more adapted to the actual service situation. Moreover, the start point and length of the time gap may also be reported by the terminal. In addition to adjusting the start point and length of the time gap according to changes of the beam in the time domain and the scheduling of actual services, the terminal may also flexibly adjust the start point and length of the time gap according to the capabilities of the terminal, such as prediction accuracy and prediction delay.

Embodiments of the disclosure provide a method for configuration, applied to a terminal. The method includes that a CSI report configuration is received. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1. By means the above implementation scheme, the CSI report configuration is configured for the terminal, so that the terminal can measure multiple pieces of information at multiple moments through one CSI report configuration, and reports the measured multiple pieces of information to the network device through one CSI report configuration, thereby saving configuration overhead and channel overhead.

Embodiments of the disclosure provide a method for configuration, applied to a network device. FIG. 2 illustrates a second flowchart of a method for configuration according to embodiments of the disclosure. As illustrated in FIG. 2, the method for configuration may include operation S201.

At S201, a CSI report configuration is configured. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

In embodiments of the disclosure, the network device configures a CSI report configuration. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

In embodiments of the disclosure, in a case that a resource type in the CSI resource configuration is configured to be semi-persistent or periodic, the CSI-RS resource set list in the CSI resource configuration includes or is associated with: the N NZP-CSI-RS resource sets, or the N CSI-SSB resource sets, or both the N NZP-CSI-RS resource sets and the N CSI-SSB resource sets, N being an integer greater than or equal to 1.

In embodiments of the disclosure, in a case that the CSI-RS resource set list includes or is associated with the N NZP-CSI-RS resource sets, each NZP-CSI-RS resource in the N NZP-CSI-RS resource sets corresponds to a same transmission periodicity.

In embodiments of the disclosure, in a case that the CSI-RS resource set list includes or is associated with the N NZP-CSI-RS resource sets and N is an integer greater than 1, NZP-CSI-RS resources from different NZP-CSI-RS resource sets among the N NZP-CSI-RS resource sets correspond to different slot offsets.

In embodiments of the disclosure, in a case that the CSI-RS resource set list includes or is associated with the N NZP-CSI-RS resource sets, parameters 'repetition' of the N NZP-CSI-RS resource sets are configured to be 'off'.

In embodiments of the disclosure, in a case that a report configuration type in the CSI report configuration and a resource type in the CSI resource configuration are configured to be aperiodic, the CSI-RS resource set list in the CSI resource configuration includes or is associated with: M NZP-CSI-RS resource sets, or M CSI-SSB resource sets, or both M NZP-CSI-RS resource sets and M CSI-SSB resource sets, M being an integer greater than or equal to 1.

In embodiments of the disclosure, a CSI report corresponding to the CSI report configuration is triggered by downlink control information (DCI). The CSI report configuration includes or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

In embodiments of the disclosure, a numeric value of at least one of N, Q or M is configured by radio resource control (RRC) signaling or is a fixed numeric value.

In embodiments of the disclosure, the network device configures the CSI report configuration. The network device receives at least one piece of first information that is within a first time interval and is determined according to the CSI resource configuration by a terminal. The first time interval has a first time point as a start point, and has a first time length or a first time gap as a length. The network device receives the at least one piece of first information according to the CSI report configuration.

In embodiments of the disclosure, the first information is at least one of: channel information, beam information, a layer 1 signal to interference plus noise ratio (L1-SINR), a layer 1 reference signal received power (L1-RSRP), a reference signal resource indicator, or a channel impulse response.

In embodiments of the disclosure, the first time point is determined by the terminal according to a CSI report time corresponding to the CSI report configuration and a first numerical value. The first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control (MAC) signaling and/or downlink control information (DCI) signaling. The first candidate value set is configured by the network device through high-layer signaling, or is preset.

In embodiments of the disclosure, the network device receives the first numerical value reported by the terminal. The first numerical value is carried in a part one of the CSI report configuration, or the part one of the CSI report configuration includes the first numerical value.

In embodiments of the disclosure, the first time length or the first time gap is determined according to a size of a first time unit and/or a number P of first time units.

In embodiments of the disclosure, the number P of the first time units is determined by the terminal in at least one of following manners: the number P of first time units is indicated by high-layer signaling; the number P of first time units is a fixed numeric value; the number P of first time units is selected from a second candidate value set; or the number P of first time units is selected from the second candidate value set according to indication of media access control (MAC) signaling and/or downlink control information (DCI) signaling. The second candidate value set is configured by the network device through high-layer signaling, or is preset.

In embodiments of the disclosure, the network device receives the number P of the first time units reported by the terminal. The number P of the first time units is carried in a part one of the CSI report configuration, or the part one of the CSI report configuration includes the number P of the first time units.

In embodiments of the disclosure, the size of the first time unit is configured by high-layer signaling, or is preset.

In embodiments of the disclosure, the network device receives T groups of first information reported by the terminal. Each group of first information among the T groups of first information corresponds to P/T first time units, and includes K pieces of first information, K being an integer greater than or equal to 1.

In embodiments of the disclosure, the network device receives S groups of first information reported by the terminal. Each group of first information among the S groups of first information corresponds to one first time unit, and includes K pieces of first information, K being an integer greater than or equal to 1.

Embodiments of the disclosure provide a method for configuration, applied to a network device. The method includes that a CSI report configuration is configured. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1. By means the above implementation scheme, the CSI report configuration is configured for the terminal, so that the terminal can measure multiple pieces of information of multiple moments through one CSI report configuration, and reports the measured multiple pieces of information to the network device through one CSI report configuration, thereby saving configuration overhead and channel overhead.

Based on the above embodiments, in another embodiment of the disclosure, a terminal 1 is provided. FIG. 3 illustrates a first schematic structural diagram of composition of a terminal according to the disclosure. As illustrated in FIG. 3, the terminal 1 includes a first receiving module 10.

The first receiving module 10 is configured to receive a channel state information (CSI) report configuration. The CSI report configuration includes or is associated with a CSI resource configuration for channel measurement.

The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

Optionally, the terminal 1 further includes: a determination module and a report module;

The determination module is configured to determine, according to the CSI resource configuration, at least one piece of first information that is within a first time interval. The first time interval has a first time point as a start point, and has a first time length or a first time gap as a length.

The report module is configured to report the at least one piece of first information to a network device according to the CSI report configuration.

Optionally, the first information is at least one of: channel information, beam information, a layer 1 signal to interference plus noise ratio (L1-SINR), a layer 1 reference signal received power (L1-RSRP), a reference signal resource indicator, or a channel impulse response.

Optionally, the determination module is further configured to determine, according to a CSI report time corresponding to the CSI report configuration and a first numerical value, the first time point. The first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control (MAC) signaling and/or downlink control information (DCI) signaling. The first candidate value set is configured by the network device through high-layer signaling, or is preset.

Optionally, the report module is further configured to report the first numerical value to the network device. The first numerical value is carried in a part one of the CSI report configuration, or the part one of the CSI report configuration includes the first numerical value.

Optionally, the determination module is further configured to determine the first time length or the first time gap according to a size of a first time unit and/or a number P of first time units.

Optionally, the number P of the first time units is determined in at least one of following manners: the number P of first time units is indicated by high-layer signaling; the number P of the first time units is a fixed numeric value; the number P of the first time units is selected from a second candidate value set; or the number P of the first time units is selected from the second candidate value set according to indication of media access control (MAC) signaling and/or downlink control information (DCI) signaling. The second candidate value set is configured by the network device through high-layer signaling, or is preset.

Optionally, the report module is further configured to report the number P of the first time units to the network device. The number P of the first time units is carried in a part one of the CSI report configuration, or the part one of the CSI report configuration includes the number P of the first time units.

Optionally, the size of the first time unit is configured by high-layer signaling, or is preset.

Optionally, the report module is further configured to report T groups of first information to the network device. Each group of first information among the T groups of first information corresponds to P/T first time units, and includes K pieces of first information, K being an integer greater than or equal to 1.

Optionally, the report module is further configured to report S groups of first information to the network device. Each group of first information among the S groups of first information corresponds to one first time unit, and includes K pieces of first information, K being an integer greater than or equal to 1.

Optionally, in a case that a resource type in the CSI resource configuration is configured to be semi-persistent or periodic, the CSI-RS resource set list in the CSI resource configuration includes or is associated with: the N NZP-CSI-RS resource sets, or the N CSI-SSB resource sets, or both the N NZP-CSI-RS resource sets and the N CSI-SSB resource sets, N being an integer greater than or equal to 1.

Optionally, in a case that the CSI-RS resource set list includes or is associated with the N NZP-CSI-RS resource sets, each NZP-CSI-RS resource in the N NZP-CSI-RS resource sets corresponds to a same transmission periodicity.

Optionally, in a case that the CSI-RS resource set list includes or is associated with the N NZP-CSI-RS resource sets and N is an integer greater than 1, NZP-CSI-RS resources from different NZP-CSI-RS resource sets among the N NZP-CSI-RS resource sets correspond to different slot offsets.

Optionally, in a case that the CSI-RS resource set list includes or is associated with the N NZP-CSI-RS resource sets, parameters 'repetition' of the N NZP-CSI-RS resource sets are configured to be 'off'.

Optionally, in a case that a report configuration type in the CSI report configuration and a resource type in the CSI resource configuration are configured to be aperiodic, the CSI-RS resource set list in the CSI resource configuration includes or is associated with: M NZP-CSI-RS resource sets, or M CSI-SSB resource sets, or both M NZP-CSI-RS resource sets and M CSI-SSB resource sets, M being an integer greater than or equal to 1.

Optionally, the first receiving module 10 is further configured to receive downlink control information (DCI). The DCI triggers a CSI report corresponding to the CSI report configuration. The CSI report configuration includes or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

Optionally, a numeric value of at least one of N, Q or M is configured by radio resource control (RRC) signaling or is a fixed numeric value.

Embodiments of the disclosure provide a terminal. The terminal includes a first receiving module, configured to receive a CSI report configuration. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1. By means the above implementation scheme, the CSI report configuration is configured for the terminal, so that the terminal can measure multiple pieces of information of multiple moments through one CSI report configuration, and reports the measured multiple pieces of information to the network device through one CSI report configuration, thereby saving configuration overhead and channel overhead.

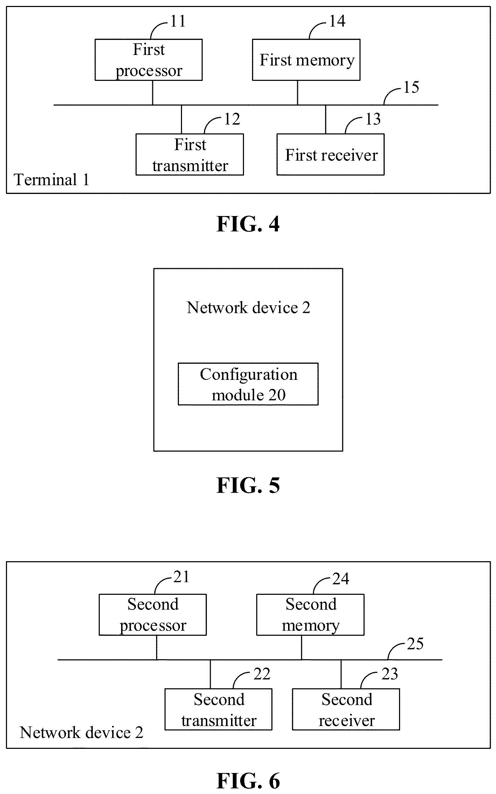

FIG. 4 illustrates a second schematic structural diagram of composition of a terminal according to embodiments of the disclosure. In a practical application, based on the same disclosed concept of the above embodiment, as illustrated in FIG. 4, the terminal 1 of the embodiment includes a first processor 11, a first transmitter 12, a first receiver 13, a first memory 14, and a first communication bus 15.

In the process of a specific embodiment, the determination module may be implemented by the first processor 11 in the terminal 1, the first receiving module 10 may be implemented by the first receiver 13 in the terminal 1, and the report module may be implemented by the first transmitter 12 in the terminal 1. The first processor 11 may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a central processing unit (CPU), a controller, a microcontroller, and a microprocessor. It may be understood that, for different terminals, the electronic devices for implementing functions of the above first processor 11 may be other devices, which is not limited in the embodiment.

In embodiments of the disclosure, the first communication bus 15 is used to realize connection communication between the first processor 11, the first transmitter 12, the first receiver 13, and the first memory 14. When the first processor 11 executes a running program stored in the first memory 14, the following method for configuration is implemented:

A channel state information (CSI) report configuration is received. The CSI report configuration includes or is associated with a CSI resource configuration for channel measurement.

The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

Optionally, the first processor 11 is further configured to determine, according to the CSI resource configuration, at least one piece of first information that is within a first time interval. The first time interval has a first time point as a start point, and has a first time length or a first time gap as a length. The terminal reports the at least one piece of first information to the network device according to the CSI report configuration.

Optionally, the first processor 11 is further configured to determine, according to a CSI report time corresponding to the CSI report configuration and a first numerical value, the first time point. The first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control (MAC) signaling and/or downlink control information (DCI) signaling. The first candidate value set is configured by the network device through high-layer signaling, or is preset.

Optionally, the first processor 11 is further configured to report the first numerical value to the network device. The first numerical value is carried in a part one of the CSI report configuration, or the part one of the CSI report configuration includes the first numerical value.

Optionally, the first processor 11 is further configured to determine the first time length or the first time gap according to a size of a first time unit and/or a number P of first time units.

Optionally, the first processor 11 is further configured to report the number P of the first time units to the network device. The number P of the first time units is carried in a part one of the CSI report configuration, or the part one of the CSI report configuration includes the number P of the first time units.

Optionally, the first processor 11 is further configured to report T groups of first information to the network device. Each group of first information among the T groups of first information corresponds to P/T first time units, and includes K pieces of first information, K being an integer greater than or equal to 1.

Optionally, the first processor 11 is further configured to report S groups of first information to the network device. Each group of first information among the S groups of first information corresponds to one first time unit, and includes K pieces of first information, K being an integer greater than or equal to 1.

Optionally, the first processor 11 is further configured to receive downlink control information (DCI). The DCI triggers a CSI report corresponding to the CSI report configuration. The CSI report configuration includes or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

Based on the above embodiments, in another embodiment of the disclosure, a network device 2 is provided. FIG. 5 illustrates a first schematic structural diagram of composition of a network device according to the disclosure. As illustrated in FIG. 5, the network device 2 includes a configuration module 20.

The configuration module 20 is configured to configure a channel state information (CSI) report configuration. The CSI report configuration includes or is associated with a CSI resource configuration for channel measurement.

The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

Optionally, in a case that a resource type in the CSI resource configuration is configured to be semi-persistent or periodic, the CSI-RS resource set list in the CSI resource configuration includes or is associated with: the N NZP-CSI-RS resource sets, or the N CSI-SSB resource sets, or both the N NZP-CSI-RS resource sets and the N CSI-SSB resource sets, N being an integer greater than or equal to 1.

Optionally, in a case that the CSI-RS resource set list includes or is associated with the N NZP-CSI-RS resource sets, each NZP-CSI-RS resource in the N NZP-CSI-RS resource sets corresponds to a same transmission periodicity.

Optionally, in a case that the CSI-RS resource set list includes or is associated with the N NZP-CSI-RS resource sets and N is an integer greater than 1, NZP-CSI-RS resources from different NZP-CSI-RS resource sets among the N NZP-CSI-RS resource sets correspond to different slot offsets.

Optionally, in a case that the CSI-RS resource set list includes or is associated with the N NZP-CSI-RS resource sets, parameters 'repetition' of the N NZP-CSI-RS resource sets are configured to be 'off'.

Optionally, in a case that a report configuration type in the CSI report configuration and a resource type in the CSI resource configuration are configured to be aperiodic, the CSI-RS resource set list in the CSI resource configuration includes or is associated with: M NZP-CSI-RS resource sets, or M CSI-SSB resource sets, or both M NZP-CSI-RS resource sets and M CSI-SSB resource sets, M being an integer greater than or equal to 1.

Optionally, the configuration module 20 is further configured to trigger, through downlink control information (DCI), a CSI report corresponding to the CSI report configuration. The CSI report configuration includes or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

Optionally, a numeric value of at least one of N, Q or M is configured by radio resource control (RRC) signaling or is a fixed numeric value.

Optionally, the configuration module 20 is further configured to receive at least one piece of first information that is within a first time interval and is determined according to the CSI resource configuration by a terminal. The first time interval has a first time point as a start point, and has a first time length or a first time gap as a length. The configuration module 20 is further configured to receive the at least one piece of first information according to the CSI report configuration.

Optionally, the first information is at least one of: channel information, beam information, a layer 1 signal to interference plus noise ratio (L1-SINR), a layer 1 reference signal received power (L1-RSRP), a reference signal resource indicator, or a channel impulse response.

Optionally, the first time point is determined by the terminal according to a CSI report time corresponding to the CSI report configuration and a first numerical value. The first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control (MAC) signaling and/or downlink control information (DCI) signaling. The first candidate value set is configured by the network device through high-layer signaling, or is preset.

Optionally, the network device 2 further includes: a second receiving module.

The second receiving module is configured to receive the first numerical value reported by the terminal. The first numerical value is carried in a part one of the CSI report configuration, or the part one of the CSI report configuration includes the first numerical value.

Optionally, the first time length or the first time gap is determined according to a size of a first time unit and/or a number P of first time units.

Optionally, the number P of the first time units is determined by the terminal in at least one of following manners: the number P of the first time units is indicated by high-layer signaling; the number P of the first time units is a fixed numeric value; the number P of the first time units is selected from a second candidate value set; or the number P of the first time units is selected from the second candidate value set according to indication of media access control (MAC) signaling and/or downlink control information (DCI) signaling. The second candidate value set is configured by the network device through high-layer signaling, or is preset.

Optionally, the second receiving module is further configured to receive the number P of the first time units reported by the terminal. The number P of the first time units is carried in a part one of the CSI report configuration, or the part one of the CSI report configuration includes the number P of the first time units.

Optionally, the size of the first time unit is configured by high-layer signaling, or is preset.

Optionally, the second receiving module is further configured to receive T groups of first information reported by the terminal. Each group of first information among the T groups of first information corresponds to P/T first time units, and includes K pieces of first information, K being an integer greater than or equal to 1.

Optionally, the second receiving module is further configured to receive S groups of first information reported by the terminal. Each group of first information among the S groups of first information corresponds to one first time unit and includes K pieces of first information, K being an integer greater than or equal to 1.

Embodiments of the disclosure provide a network device. The network device includes a configuration module. The configuration module is configured to configure a CSI report configuration. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1. By means the above implementation scheme, the CSI report configuration is configured for the terminal, so that the terminal can measure multiple pieces of information of multiple moments through one CSI report configuration, and reports the measured multiple pieces of information to the network device through one CSI report configuration, thereby saving configuration overhead and channel overhead.

FIG. 6 illustrates a second schematic structural diagram of composition of a network device according to embodiments of the disclosure. In a practical application, based on the same disclosed concept of the above embodiment, as illustrated in FIG. 6, the network device 2 of the embodiment includes a second processor 21, a second transmitter 22, a second receiver 23, a second memory 24, and a second communication bus 25.

In the process of a specific embodiment, the configuration module 20 may be implemented by the second processor 21 located on the network device 2, and the second receiving module may be implemented by the second receiver 13 located on the network device 2. The second processor 21 may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a central processing unit (CPU), a controller, a microcontroller, and a microprocessor. It may be understood that, for different network devices, the electronic devices for implementing functions of the above second processor 21 may be other devices, which is not limited in the embodiment.

In embodiments of the disclosure, the second communication bus 25 is used to realize connection communication between the second processor 21, the second transmitter 22, the second receiver 23, and the second memory 24. When the second processor 21 executes a running program stored in the second memory 24, the following method for configuration is implemented.

A channel state information (CSI) report configuration is configured. The CSI report configuration includes or is associated with a CSI resource configuration for channel measurement.

The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1.

Optionally, the second processor 21 is further configured to trigger, through downlink control information (DCI), a CSI report corresponding to the CSI report configuration. The CSI report configuration includes or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

Optionally, the second processor 21 is further configured to receive at least one piece of first information that is within a first time interval and is determined according to the CSI resource configuration by a terminal. The first time interval has a first time point as a start point, and has a first time length or a first time gap as a length.

Optionally, the second processor 21 is further configured to receive the first numerical value reported by the terminal. The first numerical value is carried in a part one of the CSI report configuration, or the part one of the CSI report configuration includes the first numerical value.

Optionally, the second processor 21 is further configured to receive the number P of the first time units reported by the terminal. The number P of the first time units is carried in a part one of the CSI report configuration, or the part one of the CSI report configuration includes the number P of the first time units.

Optionally, the second processor 21 is further configured to receive T groups of first information reported by the terminal. Each group of first information among the T groups of first information corresponds to P/T first time units, and includes K pieces of first information, K being an integer greater than or equal to 1.

Optionally, the second processor 21 is further configured to receive S groups of first information reported by the terminal. Each group of first information among the S groups of first information corresponds to one first time unit and includes K pieces of first information, K being an integer greater than or equal to 1.

Embodiments of the disclosure provide a storage medium having a computer program stored thereon. The computer-readable storage medium stores one or more programs that can be executed by one or more first processors or second processors and applied to a terminal or a network device to implement the above method for configuration.

It should be noted that, herein, the terms "comprise," "include," or any other variation thereof are intended to encompass a non-exclusive inclusion such that a process, method, article, or apparatus that includes a series of elements includes not only those elements, but also other elements that are not explicitly listed, or elements inherent to such a process, method, article, or apparatus. Without further limitation, an element limited by the expression "comprising a" does not preclude the presence of additional identical elements in a process, method, article, or apparatus that includes the element.

From the above description of implementations, those skilled in the art can clearly understand that the methods of the above embodiments can be implemented by software and a necessary universal hardware platform, and of course, can also be implemented by hardware; however, the former is a preferred implementation in many cases. Based on such understanding, the technical solution of the disclosure substantially or in part making contributions to the related art may be embodied in a software product. The computer software product is stored in a storage medium (such a read only memory (ROM)/random access memory (RAM), a magnetic disc, an optical disc), and includes several instructions to enable an image display device (which may be a mobile phone, a computer, a server, an air conditioner, a network device or the like) to perform the method for configuration according to various embodiments of the disclosure.

Described above are merely preferred embodiments of the disclosure, and are not used to limit the scope of protection of the disclosure.

**Claims**

1. A method for configuration, performed by a terminal, and comprising:

   receiving a channel state information, CSI, report configuration, wherein the CSI report configuration comprises or is associated with a CSI resource configuration for channel measurement;
   wherein the CSI resource configuration comprises a CSI reference signal, CSI-RS, resource set list; and the CSI-RS resource set list comprises or is associated with: N non-zero power CSI-RS, NZP-CSI-RS, resource sets, or N CSI synchronization signal block, CSI-SSB, resource sets, or both N NZP-CSI-RS resource sets and N CSI-SSB resource sets, N being an integer greater than or equal to 1.

2. The method of claim 1, further comprising:

   determining, according to the CSI resource configuration, at least one piece of first information that is within a first time interval, wherein the first time interval has a first time point as a start point, and has a first time length or a first time gap as a length; and
   reporting the at least one piece of first information to a network device according to the CSI report configuration.

3. The method of claim 2, wherein the first information is at least one of: channel information, beam information, a layer 1 signal to interference plus noise ratio, L1-SINR, a layer 1 reference signal received power, L1-RSRP, a reference signal resource indicator, or a channel impulse response.

4. The method of claim 2, further comprising:

   determining, according to a CSI report time corresponding to the CSI report configuration and a first numerical value, the first time point;
wherein the first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control, MAC, signaling and/or downlink control information, DCI, signaling; and
wherein the first candidate value set is configured by the network device through high-layer signaling, or is preset.

5. The method of claim 4, further comprising:
   reporting the first numerical value to the network device, wherein the first numerical value is carried in a part one of the CSI report configuration, or the part one of the CSI report configuration comprises the first numerical value.

6. The method of claim 2, further comprising:
   determining the first time length or the first time gap according to a size of a first time unit and/or a number P of first time units.

7. The method of claim 6, wherein the number P of the first time units is determined in at least one of following manners: the number P of the first time units is indicated by high-layer signaling; the number P of the first time units is a fixed numeric value; the number P of the first time units is selected from a second candidate value set; or the number P of the first time units is selected from the second candidate value set according to indication of media access control, MAC, signaling and/or downlink control information, DCI, signaling; and
   wherein the second candidate value set is configured by the network device through high-layer signaling, or is preset.

8. The method of claim 7, further comprising:
   reporting the number P of the first time units to the network device, wherein the number P of the first time units is carried in a part one of the CSI report configuration, or the part one of the CSI report configuration comprises the number P of the first time units.

9. The method of claim 6, wherein the size of the first time unit is configured by high-layer signaling, or is preconfigured.

10. The method of claim 6, further comprising:
    reporting T groups of first information to the network device;
    wherein each group of first information among the T groups of first information corresponds to P/T first time units, and comprises K pieces of first information, K being an integer greater than or equal to 1.

11. The method of claim 6, further comprising:
reporting S groups of first information to the network device;
wherein each group of first information among the S groups of first information corresponds to one first time unit and comprises K pieces of first information, K being an integer greater than or equal to 1.

12. The method of claim 1, further comprising:
in a case that a resource type in the CSI resource configuration is configured to be semi-persistent or periodic, the CSI-RS resource set list in the CSI resource configuration comprises or is associated with: the N NZP-CSI-RS resource sets, or the N CSI-SSB resource sets, or both the N NZP-CSI-RS resource sets and the N CSI-SSB resource sets, N being an integer greater than or equal to 1.

13. The method of claim 1 or 12, further comprising:
in a case that the CSI-RS resource set list comprises or is associated with the N NZP-CSI-RS resource sets, each NZP-CSI-RS resource in the N NZP-CSI-RS resource sets corresponds to a same transmission periodicity.

14. The method of claim 1 or 12, further comprising:
in a case that the CSI-RS resource set list comprises or is associated with the N NZP-CSI-RS resource sets and N is an integer greater than 1, NZP-CSI-RS resources from different NZP-CSI-RS resource sets among the N NZP-CSI-RS resource sets correspond to different slot offsets.

15. The method of claim 1 or 12, further comprising:
in a case that the CSI-RS resource set list comprises or is associated with the N NZP-CSI-RS resource sets, parameters 'repetition' of the N NZP-CSI-RS resource sets are configured to be off.

16. The method of claim 1, further comprising:
in a case that a report configuration type in the CSI report configuration and a resource type in the CSI resource configuration are configured to be aperiodic, the CSI-RS resource set list in the CSI resource configuration comprises or is associated with: M NZP-CSI-RS resource sets, or M CSI-SSB resource sets, or both M NZP-CSI-RS resource sets and M CSI-SSB resource sets, M being an integer greater than or equal to 1.

17. The method of claim 16, further comprising:
receiving downlink control information, DCI, wherein the DCI triggers a CSI report corresponding to the CSI report configuration; the CSI report configuration comprises or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

18. The method of any one of claims 12, 16 and 17, wherein a numeric value of at least one of N, Q or M is configured by radio resource control, RRC, signaling or is a fixed numeric value.

19. A method for configuration, performed by a network device and comprising:

configuring a channel state information, CSI, report configuration, wherein the CSI report configuration comprises or is associated with a CSI resource configuration for channel measurement;
wherein the CSI resource configuration comprises a CSI reference signal, CSI-RS, resource set list; and the CSI-RS resource set list comprises or is associated with: N non-zero power CSI-RS, NZP-CSI-RS, resource sets, or N CSI synchronization signal block, CSI-SSB, resource sets, or both N NZP-CSI-RS resource sets and N CSI-SSB resource sets, N being an integer greater than or equal to 1.

20. The method of claim 19, further comprising:
in a case that a resource type in the CSI resource configuration is configured to be semi-persistent or periodic, the CSI-RS resource set list in the CSI resource configuration comprises or is associated with: the N NZP-CSI-RS resource sets, or the N CSI-SSB resource sets, or both the N NZP-CSI-RS resource sets and the N CSI-SSB resource sets, N being an integer greater than or equal to 1.

21. The method of claim 19 or 20, further comprising:
in a case that the CSI-RS resource set list comprises or is associated with the N NZP-CSI-RS resource sets, each NZP-CSI-RS resource in the N NZP-CSI-RS resource sets corresponds to a same transmission periodicity.

22. The method of claim 19 or 20, further comprising:
in a case that the CSI-RS resource set list comprises or is associated with the N NZP-CSI-RS resource sets and N is an integer greater than 1, NZP-CSI-RS resources from different NZP-CSI-RS resource sets among the N NZP-CSI-RS resource sets correspond to different slot offsets.

23. The method of claim 19 or 20, further comprising:

in a case that the CSI-RS resource set list comprises or is associated with the N NZP-CSI-RS resource sets, parameters 'repetition' of the N NZP-CSI-RS resource sets are configured to be 'off'.

24. The method of claim 19, further comprising:
in a case that a report configuration type in the CSI report configuration and a resource type in the CSI resource configuration are configured to be aperiodic, the CSI-RS resource set list in the CSI resource configuration comprises or is associated with: M NZP-CSI-RS resource sets, or M CSI-SSB resource sets, or both M NZP-CSI-RS resource sets and M CSI-SSB resource sets, M being an integer greater than or equal to 1.

25. The method of claim 24, further comprising:
triggering, by downlink control information, DCI, a CSI report corresponding to the CSI report configuration, wherein the CSI report configuration comprises or is associated with: Q NZP-CSI-RS resource sets among the M NZP-CSI-RS resource sets, or Q CSI-SSB resource sets among the M CSI-SSB resource sets, or both Q NZP-CSI-RS resource sets among the M NZP-CSI-RS resource sets and Q CSI-SSB resource sets among the M CSI-SSB resource sets, Q being an integer greater than or equal to 1.

26. The method of any one of claims 20, 24 and 25, wherein a numeric value of at least one of N, Q or M is configured by radio resource control, RRC, signaling or is a fixed numeric value.

27. The method of claim 19, further comprising:

receiving at least one piece of first information that is within a first time interval and is determined according to the CSI resource configuration by a terminal, wherein the first time interval has a first time point as a start point, and has a first time length or a first time gap as a length; and
receiving the at least one piece of first information according to the CSI report configuration.

28. The method of claim 27, wherein the first information is at least one of: channel information, beam information, a layer 1 signal to interference plus noise ratio, L1-SINR, a layer 1 reference signal received power, L1-RSRP, a reference signal resource indicator, or a channel impulse response.

29. The method of claim 27, wherein the first time point is determined by the terminal according to a CSI report time corresponding to the CSI report configuration and a first numerical value; wherein the first numerical value is determined in at least one of following manners: the first numerical value is a fixed numerical value; the first numerical value is indicated by high-layer signaling; the first numerical value is selected from a first candidate value set; or the first numerical value is selected from the first candidate value set according to indication of media access control, MAC, signaling and/or downlink control information, DCI, signaling; and
wherein the first candidate value set is configured by the network device through high-layer signaling, or is preset.

30. The method of claim 29, further comprising:
receiving the first numerical value reported by the terminal, wherein the first numerical value is carried in a part one of the CSI report configuration, or the part one of the CSI report configuration comprises the first numerical value.

31. The method of claim 27, wherein the first time length or the first time gap is determined according to a size of a first time unit and/or a number P of first time units.

32. The method of claim 31, wherein the number P of the first time units is determined by the terminal in at least one of following manners: the number P of the first time units is indicated by high-layer signaling; the number P of the first time units is a fixed numeric value; the number P of the first time units is selected from a second candidate value set; or the number P of the first time units is selected from the second candidate value set according to indication of media access control, MAC, signaling and/or downlink control information, DCI, signaling; and
wherein the second candidate value set is configured by the network device through high-layer signaling, or is preset.

33. The method of claim 32, further comprising:
receiving the number P of the first time units reported by the terminal, wherein the number P of the first time units is carried in a part one of the CSI report configuration, or the part one of the CSI report configuration comprises the number P of the first time units.

34. The method of claim 31, wherein the size of the first time unit is configured by high-layer signaling, or is preset.

35. The method of claim 31, further comprising:
receiving T groups of first information reported by the terminal, wherein each group of first information among the T groups of first information corresponds to P/T first time units, and comprises K pieces of first information, K being an integer greater than or equal to 1.

36. The method of claim 31, further comprising:
receiving S groups of first information reported by the terminal, wherein each group of first information among the S groups of first information corresponds to one first time unit and comprises K pieces of first information, K being an integer greater than or equal to 1.

37. A terminal, comprising:

a first receiving module, configured to receive a channel state information, CSI, report configuration, wherein the CSI report configuration comprises or is associated with a CSI resource configuration for channel measurement; wherein the CSI resource configuration comprises a CSI reference signal, CSI-RS, resource set list; and the CSI-RS resource set list comprises or is associated with: N non-zero power CSI-RS, NZP-CSI-RS, resource sets, or N CSI synchronization signal block, CSI-SSB, resource sets, or both N NZP-CSI-RS resource sets and N CSI-SSB resource sets, N being an integer greater than or equal to 1.

38. A network device, comprising:

a configuration module, configured to configure a channel state information, CSI, report configuration, wherein the CSI report configuration comprises or is associated with a CSI resource configuration for channel measurement; wherein the CSI resource configuration comprises a CSI reference signal, CSI-RS, resource set list; and the CSI-RS resource set list comprises or is associated with: N non-zero power CSI-RS, NZP-CSI-RS, resource sets, or N CSI synchronization signal block, CSI-SSB, resource sets, or both N NZP-CSI-RS resource sets and N CSI-SSB resource sets, N being an integer greater than or equal to 1.

39. A terminal, comprising a first processor, a first transmitter, a first receiver, a first memory and a first communication bus, wherein the first processor executes an operational program stored in the first memory to implement the method of any one of claims 1 to 18.

40. A network device, comprising a second processor, a second transmitter, a second receiver, a second memory and a second communication bus, wherein the second processor executes a running program stored in the second memory to implement the method of any one of claims 19 to 36.

41. A storage medium having stored thereon with a computer program that, when executed by a first processor, implements the method of any one of claims 1 to 18, or that, when executed by a second processor, implements the method of any one of claims 19 to 36.

Received a CSI report configuration. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1

S101

**FIG. 1**

Configure a CSI report configuration. The CSI report configuration includes or is associated with a CSI resource configuration for channel measurement. The CSI resource configuration includes a CSI reference signal (CSI-RS) resource set list. The CSI-RS resource set list includes or is associated with: N non-zero power CSI-RS (NZP-CSI-RS) resource sets, or N CSI synchronization signal block (CSI-SSB) resource sets, or both N NZP-CSI-RS resource sets and N CSI-SSB resource sets, N being an integer greater than or equal to 1

S201

**FIG. 2**

Terminal 1

First receiving module 10

**FIG. 3**

**FIG. 4**

**FIG. 5**

**FIG. 6**

## INTERNATIONAL SEARCH REPORT

| International application No. |
| --- |
| **PCT/CN2024/084523** |

| A. | CLASSIFICATION OF SUBJECT MATTER |
| --- | --- |
| | H04W24/10(2009.01)i |

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN: 多个, 关联, 资源集, 信道状态信息, 上报, 报告, 非零功率, 偏移, 同步信号块, 减少, 节省, 节约, 开销, 配置, multiple, resourceset?, CSI, report, NZP-CSI-RS, CSI-SSB, offset, reduce, save, overhead, config+

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 108616345 A (HUAWEI TECHNOLOGIES CO., LTD.) 02 October 2018 (2018-10-02) description, paragraphs 111-150 | 1-41 |
| X | CN 114503504 A (BEIJING XIAOMI MOBILE SOFTWARE CO., LTD.) 13 May 2022 (2022-05-13) description, paragraphs 49-94, and figures 1-4 | 1-41 |
| X | WO 2019136640 A1 (FUJITSU LIMITED) 18 July 2019 (2019-07-18) description, page 6, paragraph 5 to page 11, paragraph 7 | 1-41 |
| X | CN 114071532 A (DATANG MOBILE COMMUNICATIONS EQUIPMENT CO., LTD.) 18 February 2022 (2022-02-18) description, paragraphs 237-262 | 1, 19, 37-41 |
| X | CN 115298970 A (SONY CORP.) 04 November 2022 (2022-11-04) description, paragraphs 38-48 | 1, 19, 37-41 |
| X | 3GPP. "3rd Generation Partnership Project; Technical Specification Group Radio Access Network; NR; Radio Resource Control (RRC) protocol specification(Release 17)" *3GPP TS 38.331 V17.4.0 (2023-03)*. 30 March 2023 (2023-03-30), pages 565-567 | 1, 19, 37-41 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 May 2024** | **10 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/084523**

| Patent document cited in search report | | | Publication date (day/month/year) | Patent family member(s) | | | Publication date (day/month/year) |
|---|---|---|---|---|---|---|---|
| CN | 108616345 | A | 02 October 2018 | US | 2019268199 | A1 | 29 August 2019 |
| | | | | US | 10608857 | B2 | 31 March 2020 |
| | | | | CA | 3024585 | A1 | 25 May 2019 |
| | | | | CA | 3024585 | C | 16 February 2021 |
| | | | | JP | 2020502830 | A | 23 January 2020 |
| | | | | JP | 6667678 | B2 | 18 March 2020 |
| | | | | BR | 112018076850 | A2 | 16 July 2019 |
| | | | | US | 2020195479 | A1 | 18 June 2020 |
| | | | | US | 11303490 | B2 | 12 April 2022 |
| | | | | EP | 3509241 | A1 | 10 July 2019 |
| | | | | EP | 3509241 | A4 | 02 October 2019 |
| | | | | EP | 3509241 | B1 | 02 August 2023 |
| | | | | ES | 2957309 | T3 | 17 January 2024 |
| | | | | WO | 2019100722 | A1 | 31 May 2019 |
| | | | | CN | 108616345 | B | 26 March 2019 |
| | | | | VN | 64888A | A | 26 August 2019 |
| | | | | IN | 201817042157 | A | 03 January 2020 |
| | | | | VN | 10036767 | B | 25 September 2023 |
| CN | 114503504 | A | 13 May 2022 | WO | 2023133761 | A1 | 20 July 2023 |
| WO | 2019136640 | A1 | 18 July 2019 | JP | 2021507573 | A | 22 February 2021 |
| | | | | JP | 7040617 | B2 | 23 March 2022 |
| | | | | US | 2020304263 | A1 | 24 September 2020 |
| | | | | CN | 111345007 | A | 26 June 2020 |
| | | | | CN | 111345007 | B | 30 May 2023 |
| CN | 114071532 | A | 18 February 2022 | WO | 2022022565 | A1 | 03 February 2022 |
| | | | | TW | 202207653 | A | 16 February 2022 |
| CN | 115298970 | A | 04 November 2022 | JP | 2023518857 | A | 08 May 2023 |
| | | | | EP | 4120582 | A1 | 18 January 2023 |
| | | | | EP | 4120582 | A4 | 13 September 2023 |
| | | | | US | 2023070011 | A1 | 09 March 2023 |
| | | | | WO | 2021190386 | A1 | 30 September 2021 |
| | | | | CN | 113453271 | A | 28 September 2021 |

Form PCT/ISA/210 (patent family annex) (July 2022)

**EP 4 683 376 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310342197